(19) Europäisches Patentamt
European Patent Office
Office européen des brevets

(11) Veröffentlichungsnummer : **0 383 797 B1**

(12) # EUROPÄISCHE PATENTSCHRIFT

(45) Veröffentlichungstag der Patentschrift :
**22.07.92 Patentblatt 92/30**

(51) Int. Cl.$^5$ : **G01M 15/00**

(21) Anmeldenummer : **88909081.7**

(22) Anmeldetag : **26.10.88**

(86) Internationale Anmeldenummer :
**PCT/DE88/00657**

(87) Internationale Veröffentlichungsnummer :
**WO 89/03983 05.05.89 Gazette 89/10**

(54) **VERFAHREN ZUR ERMITTLUNG DES VERBRENNUNGSDRUCKS EINER BRENNKRAFTMASCHINE SOWIE ZUR AUSWERTUNG DIESES DRUCKS.**

(30) Priorität : **28.10.87 DE 3736430**

(43) Veröffentlichungstag der Anmeldung :
**29.08.90 Patentblatt 90/35**

(45) Bekanntmachung des Hinweises auf die Patenterteilung :
**22.07.92 Patentblatt 92/30**

(84) Benannte Vertragsstaaten :
**DE FR**

(56) Entgegenhaltungen :
**EP-A- 0 172 983**
**Patent Abstracts of Japan, vol.9, Nr.320 (p-413) (2043) 14 December 1985 & JP,A, 60147631**
**Patent Abstracts of Japan, vol.10, Nr.237 (P-487) (2293) 15 August 1986 & JP, A, 6168533**

(73) Patentinhaber : **ROBERT BOSCH GMBH**
**Postfach 30 02 20**
**W-7000 Stuttgart 30 (DE)**

(72) Erfinder : **BROSI, Thomas**
**Flurstr. 13**
**W-7158 Sulzbach/Murr (DE)**
Erfinder : **HESS, Werner**
**Luisenstr. 4**
**W-7012 Fellbach (DE)**
Erfinder : **MOSER, Winfried**
**Grundweinberge 14**
**W-7140 Ludwigsburg (DE)**
Erfinder : **SCHNEIDER, Hermann**
**Krugstr. 24**
**W-7100 Heilbronn (DE)**

**EP 0 383 797 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

### Stand der Technik

Es sind Verfahren zur Bestimmung des Verbrennungsdrucks bekannt, bei denen sehr robuste und genaue Sensoren eingesetzt werden. Insbesondere, wenn der Verbrennungsdruck zur Steuerung und/oder Überwachung von Funktionen der Brennkraftmaschine herangezogen werden soll, sind die Anforderungen an die Genauigkeit der gemessenen Druckwerte sehr hoch. Wesentlich ist auch, daß die Meßempfindlichkeit und -genauigkeit über einen weiten Temperaturbereich konstant sein muß. Die bekannten Verfahren haben daher den Nachteil, daß sehr teure Sensoren verwendet werden müssen, wenn die gemessenen Druckwerte für die Steuerung und/oder Überwachung der Brennkraftmaschine verwendbar sein sollen.

Aus Patent Abstracts of Japan, Bd. 9, Nr. 320, (p-413) (2043), 14.12.1985, JP-A-60 147 631 ist eine Einrichtung zur Ermittlung des Verbrennungsdrucks bekannt. Dazu wird einerseits der Druck im Brennraum mittels eines Drucksensors erfaßt, andererseits wird fortlaufend der jeweilige Kompressionsdruck bei bestimmter Kurbelwellenposition berechnet. Durch Substraktion des Kompressionsdrucks vom gemessenen Brennraumdruck läßt sich dann der Verbrennungsdruck bestimmen, der letztlich zur Zündzeitpunktermittlung verwendet wird. Diese Einrichtung erfordert somit eine rechnerische Bestimmung des Kompressionsdrucks und nimmt Rückgriff auf Größen, die nicht langzeitstabil sind, weil sich während der Lebensdauer einer Brennkraftmaschine immer wieder Dichtheitsprobleme bei Einlaß- und Auslaßventilen ergeben und im übrigen auch die Kolbenringe während der Lebensdauer der Brennkraftmaschine einem Verschleiß unterliegen.

### Vorteile der Erfindung

Das Verfahren zur Ermittlung des Verbrennungsdrucks einer Brennkraftmaschine mit den in Anspruch 1 genannten Merkmalen hat dem gegenüber den Vorteil, daß auch einfache, relativ ungenaue Druckaufnehmer verwendet werden können, deren Meßempfindlichkeit sich während des Betriebs ändert. Dies wird dadurch erreicht, daß der Verbrennungsdruck gewonnen wird, indem der im Brennraum eines Zylinders herrschende Kompressionsdruck, also der Druck bestimmt wird, der ohne den Einfluß eines Zündvorgangs im Brennraum herrscht. Diese Druckwerte werden gespeichert und vom momentan im Betrieb der Brennkraftmaschine herrschenden Brennraumdruck zur Erzeugung des momentanen Verbrennungsdruckwerts abgezogen. Alle Druckwerte werden in Abhängigkeit vom Kurbelwinkel $\alpha$ bestimmt. Der Verbrennungsdruckverlauf berechnet sich also aus der Differenz des momentanen Brennraumdrucks $p(\alpha)$ und des Kompressionsdrucks $p_k(\alpha)$. Daher wird der Verbrennungsdruck auch als Verbrennungsdifferenzdruck bezeichnet.

Dabei wird der Kompressionsdruck in Abhängigkeit vom Kurbelwikel $\alpha$ bis zur Erreichung eines bestimmten Kurbelwikels gemessen und gespeichert. Der dabei entstehende Druckverlauf wird an einer durch den bestimmten Kurbelwinkel verlaufenden Achse gespiegelt, wobei die vor Erreichen des bestimmten Kurbelwinkels gespeicherten Werte abgerufen werden, sobald dieser Kurbelwinkel überschritten wird. Dieser entlang einer symmetrischen Kurve verlaufende Kompressionsdruckwert wird zur Berechnung des Verbrennungsdruckwerts herangezogen. Das heißt, die bei dieser Berechnung erhaltenen Kompressionsdruckwerte werden zur Bestimmung des Verbrennungsdruckwerts von dem momentanen Verbrennungsdruck abgezogen.

Als bestimmter Kurbelwinkel wird der obere Totpunkt eines Zylinders während des Arbeitszyklus' gewählt.

Vorzugsweise läßt sich dieses Verfahren zur Regelung des Zündwinkels bei einer Brennkraftmaschine einsetzen. Dazu wird das Maximum des Verbrennungsdruckwerts über dem Kurbelwinkel bestimmt. Durch eine Verschiebung des Zündwinkels wird nunmehr dieser Maximalwert des Verbrennungsdruckwerts solange verschoben, bis er bei einem gewünschten Kurbelwinkel auftritt . Mit diesem Verfahren läßt sich also die sogenannte Verbrennungslage, d.h. die Energieumsetzung bezogen auf die Kurbelstellung, so regeln, daß Abgaswerte und Verbrauch der Brennkraftmaschine möglichst günstig sind. Dabei wird die Lage der Verbrennung, die Verbrennungslage, durch den Zeitpunkt bzw. die Kurbelwellenstellung gekennzeichnet, bei der 50% der Energie der Zylinderladung umgesetzt sind.

Dieses Verfahren kann vorzugsweise auch bei einer auf dem Verbrennungsdruck beruhenden Überwachung der Brennkraftmaschine herangezogen werden. Dabei wird wiederum der Maximalwert des Verbrennungsdrucks bestimmt und die zyklischen Schwankungen dieses Maximalwerts zur Überwachung der Brennkraftmaschine herangezogen. Auch ist es möglich eine Laufruheregelung der Brennkraftmaschine anhand der gewonnenen zyklischen Druckschwankungen durchzuführen.

Das Verfahren zur Überwachung und/oder Regelung eines Brennkraftmaschine mit den in Anspruch 2 aufgeführten Merkmalen hat den Vorteil, daß die zur Bestimmung des Verbrennungsdrucks erforderlichen Werte sehr einfach bestimmbar sind. Dabei wird der gemessene Brennraumdruck zur Berechnung eines Integralwerts $P^*_I$ des Verbrennungsdrucks mit Hilfe von zwei kurbelwinkelgesteuerten Integratoren integriert. Ein erster Integrationsbereich erstreckt sich von einem vorgegebenen Kurbelwinkel über einen bestimmten Kurbelwinkelbereich. Ein zweiter Integrationsbereich erstreckt sich über einen vor dem bestimmten Kurbelwinkel liegenden Winkelbereich gleicher Größe. Zur Berechnung des Integralwerts $P^*_I$ wird das Ergebnis der vor dem bestimmten Winkel liegenden Integration von dem Ergebnis der nach dem Winkel liegenden Integration abgezogen.

## Zeichnung

Die Erfindung wird im folgenden anhand von Figuren näher erläutert. Es zeigen:

Figur 1 ein Diagramm, welches die Lage des Druckmaximums bezüglich einer definierten Verbrennungslage wiedergibt;

Figur 2 den Ablaufplan einer ersten Ausführungsform eines Verfahrens zur Regelung des Zündwinkels bei einer Brennkraftmaschine;

Figur 3 den Ablaufplan einer zweiten Ausführungsform des Verfahrens gemäß Figur 2;

Figur 4 ein Diagramm, welches den Brennraumdruck über dem Kurbelwinkel $\alpha$ (durchgezogene Linie), den an einer den oberen Totpunkt schneidenden Achse gespiegelten Verlauf des Brennraumdrucks (gepunktete Linie) sowie den Verlauf des berechneten Verbrennungsdrucks (gestrichelte Linie) bei niedriger Belastung wiedergibt;

Figur 5 den Verlauf des Brennraumdrucks und den berechneten Verbrennungsdruck über dem Kurbelwinkel bei hoher Belastung;

Figur 6 den Verlauf des Brennraumdrucks und den berechneten Verbrennungsdruck über dem Kurbelwinkel bei niedriger Belastung;

Figur 7 einen Ablaufplan, aus dem ersichtlich ist, wie aus dem Verbrennungsdruck der Maximalwert und der zugehörige Kurbelwinkel bestimmt wird;

Figur 8 den Ablaufplan eines Verfahrens zur Bestimmung eines Integralwerts des Verbrennungsdruckverlaufs und

Figur 9 einen Ablaufplan eines Verfahrens zur Ermittlung des Verbrennungsdrucks, bei dem ein Integralwert unmittelbar aus dem Brennraumdrunk bestimmt wird.

## Beschreibung der Ausführungsformen

Ein wesentlicher Parameter für die Steuerung und Überwachung einer Brennkraftmaschine ist der im Brennraum herrschende Verbrennungsdruck.

Um den Brennraumdruck so genau bestimmen zu können, daß die gemessenen Druckwerte für Steuerung und Überwachung einer Brennkraftmaschine verwendbar sind, müssen bei bekannten Verfahren sehr genaue Druckaufnehmer verwendet werden, die über einen weiten Bereich eine gleichbleibende Meßempfindlichkeit aufweisen.

Bei dem erfindungsgemäßen Verfahren wird der Brennraumdruck $p(\alpha)$ mittels eines einfachen Drucksensors bestimmt. Die ermittelten Druckwerte werden aber nicht unmittelbar zur Bestimmung des Verbrennungsdrucks herangezogen.

Zusätzlich zum Brennraumdruck $p(\alpha)$ wird der sogenannte Kompressionsdruck $p_k(\alpha)$ gemessen. Unter Kompressionsdruck versteht man den Druck, der in einem Brennraum durch die Bewegung des Kolbens innerhalb des Zylinders entsteht, ohne daß eine Zündung stattfindet. Der Motor wirkt dabei als Kompressor, weswegen der Kompressionsdruck auch mit Kompressordruck bezeichnet wird.

Der Kompressionsdruck wird zu einem bestimmten Kurbelwinkel, hier bis zum oberen Totpunkt des Kolbens gemessen. Durch diese Druckwerte ergibt sich ein Kurvenverlauf über dem Kurbelwinkel $\alpha$. Dieser Kurvenverlauf wird an einer senkrechten Achse gespiegelt, die durch den oberen Totpunkt verläuft.

Diese Spiegelung kann beispielsweise graphisch ausgeführt werden, indem man den Verlauf des Kompressionsdrucks $p_k(\alpha)$ über dem Kurbelwinkel $\alpha$ bis zum oberen Totpunkt aufträgt und den bis dahin gewonnenen Kurvenverlauf geometrisch spiegelt. Es ist auch möglich, die bis zum oberen Totpunkt anfallenden Druckwerte in einen Speicher einzugeben. Nach Erreichen des oberen Totpunkts werden jeweils die Druckwerte abgerufen, die um denselben Kurbelwinkelbetrag vor dem oberen Totpunkt gemessen und abgespeichert wurden.

Der Kompressionsdruck kann auch kontinuierlich während des Betriebs der Brennkraftmaschine erfaßt werden. Dabei muß aber sichergestellt sein, daß vor dem oberen Totpunkt keine wesentlichen Druckänderungen durch einen Zündvorgang hervorgerufen werden. Es ist auch möglich, derartige Druckänderungen zu vernachlässigen. Es ist aber auch denkbar, den Kompressionsdruck in einem Meßvorgang unabhängig vom Betrieb der Brennkraftmaschine zu bestimmen, in einem Speicher abzulegen und die Spiegelung des dabei

gewonnenen Kurvenverlaufs vorzunehmen.

Aus dem gemessenen Brennraumdruck $p(\alpha)$ und dem Kompressionsdruck $p_k(\alpha)$ wird der Verbrennungsdruck $p^*(\alpha)$ berechnet, indem der Kompressionsdruck $p_k(\alpha)$ vom tatsächlichen Brennraumdruck $p(\alpha)$ abgezogen wird. Die anstelle des aktuellen Brennraumdrucks erzeugte Ersatzgröße, nämlich der Verbrennungsdruck $p^*(\alpha)$ ergibt sich also aus der folgenden Gleichung:

$$p^*(\alpha) = p(\alpha) - p_k(\alpha). \quad (1)$$

Mit Hilfe dieses Verfahrens wird ein Druckverlauf ermittelt, der allein auf der Verbrennung im Brennraum beruht. Besonders vorteilhaft ist dabei, daß die Druckbestimmung auch mit Hilfe von relativ ungenauen Druckaufnehmern, deren Empfindlichkeit sich während des Betriebs ändert, möglich ist.

Der im Brennraum herrschende Kompressionsdruck $p_k(\alpha)$ kann auch noch auf andere Weise gewonnen und zur Berechnung des Ersatzdruckwerts herangezogen werden. Dazu wird die polytrope Verdichtung bzw. Expansion nach folgender Gleichung ermittelt:

$$p_k(\alpha) = \left[\frac{V(\alpha 1)}{V(\alpha)}\right]^n \cdot p_k(\alpha 1). \quad (2)$$

Diese Verfahrensweise fällt nicht unter das beanspruche Verfahren. Um den Verlauf des Ersatzdrucks über dem Kurbelwinkel $\alpha$ festlegen zu können, wird der im Brennraum herrschende Kompressionsdruck $pk(\alpha 1)$ bei einem bestimmten Kurbelwinkel $\alpha 1$ von beispielsweise 60° vor dem oberen Totpunkt des zugehörigen Zylinders ermittelt. Dieser Kurbelwinkel wird so gewählt, daß mit Sicherheit noch keine Verbrennung im Brennraum stattfindet. Überdies wird das Brennraumvolumen $V(\alpha 1)$ bei diesem Kurbelwinkel ermittelt. Im übrigen werden in Gleichung (2) mit $p_k(\alpha)$ der Kompressionsdruck bei einem Kurbelwinkel $\alpha$, mit $V(\alpha)$ das Brennraumvolumen bei einem Kurbelwinkel $\alpha$ und mit n der Polytropenexponent bezeichnet, der bei heutigen Ottomotoren etwa den Wert 1,32 hat.

Gleichung (2) kann noch vereinfacht werden, indem der Klammerausdruck durch $c(\alpha)$ ersetzt wird. Es gilt also:

$$\left[\frac{V(\alpha 1)}{V(\alpha)}\right]^n = c(\alpha). \quad (3)$$

Die Werte von $c(\alpha)$ werden in einer Tabelle, d.h. in einem Speicher abgelegt. Für jeden Kurbelwinkel $\alpha$ werden die zugehörigen Werte von $c(\alpha)$ zur Berechnung der Ersatzdrucks $p^*(\alpha)$ abgerufen.

Danach ergibt sich für den Ersatzdruck $p^*(\alpha)$ aus Gleichung (1) in Verbindung mit den Gleichungen (2) und (3) folgende Funktion:

$$p^*(\alpha) = p(\alpha) - c(\alpha) \cdot p_k(\alpha 1). \quad (4)$$

Eine Möglichkeit der Auswertung der mit diesem Verfahren gewonnenen Druckwerte soll anhand eines Verfahrens zur Regelung des Zündwinkels bei einer Brennkraftmaschine beschrieben werden.

Bei einem bekannten Verfahren dieser Art wird die Verbrennungslage, das heißt die Energieumsetzung bezogen auf die Kurbelstellung, so geregelt, daß Abgaswerte und Verbrauch möglichst günstig sind. Die Verbrennungslage wird durch den Zeitpunkt bzw. die Kurbelstellung definiert, bei dem bzw. bei der 50% der Energie der Zylinderladung umgesetzt sind. Die so definierte Verbrennungslage wird aus dem Brennraumdruckverlauf errechnet. Diese Berechnung ist jedoch sehr aufwendig. Bei herkömmlichen Verfahren wird die so definierte Verbrennungslage zur Berechnung des Brennraumdruckverlaufs herangezogen. Insbesondere bei niedrigen Lastzuständen ist bei bekannten Verfahren eine eindeutige Zuordnung zwischen der Lage der Verbrennung und dem Brennraumdruckmaximum praktisch nicht möglich.

Bei einem weiteren bekannten Verfahren dieser Art wird daher zur Bestimmung der Verbrennungslage als Ersatzgröße die Lage des maximalen Brennraumdrucks ermittelt, also die Kurbelstellung bzw. der Kurbelwinkel bei Auftreten des maximalen Brennraumdrucks. Bei hohem Lastzustand der Brennkraftmaschine läßt sich eine eindeutigte Zuordnung zwischen der Lage der Verbrennung und dem Druckmaximum finden. Dies ist jedoch bei niedrigem Lastzustand, insbesondere im Leerlauf, nicht möglich. Die Ursache liegt darin, daß sich die Brennraumdruckänderung im Bereich unmittelbar nach dem oberen Totpunkt zusammensetzt aus einem Druckabfall infolge des größer werdenden Brennraumvolumens und einer Drucksteigerung, die auf der zu diesem Zeitpunkt freigesetzten chemischen Energie beruht. Die Energiefreisetzung erfolgt durch die Verbrennung des Luft-Kraftstoffgemischs. Das Maximum des Brennraumdrucks ist dann erreicht, wenn sich Druckanstieg und Druckabfall gerade aufheben.

Durch eine Änderung des Zündwinkels kann erreicht werden, daß sich das Druckmaximum verschiebt und jeweils bei einem anderen Kurbelwinkel auftritt. Wird der Zündwinkel, das heißt der Zündzeitpunkt, geändert, so verschiebt sich die Verbrennungslage. Damit verschiebt sich auch das Gleichgewicht zwischen dem genannten Druckanstieg und Druckabfall. Durch die Änderung dieser Gleichgewichtslage ändert sich also auch das Brennraumdruckmaximum.

Bei niedriger Last wird weniger chemische Energie freigesetzt. Dadurch ist auch der Druckanstieg nach Erreichen des oberen Totpunkts geringer. Der Einfluß des auf dem größer werdenden Brennraumvolumen beruhenden Druckabfalls ist dadurch relativ groß. Bei niedriger Last ändert sich überdies der Verlauf der Energieumsetzung in Abhängigkeit von der Verbrennungslage. Dies führt dazu, daß sich die Lage des Druckmaximums auch bei sich änderndem Zündwinkel kaum noch mit der Lage der Verbrennung ändert.

Wenn das oben beschriebene Verfahren zur Ermittlung des Verbrennungsdrucks zur Regelung des Zündwinkels bei einer Brennkraftmaschine herangezogen wird, so ergibt sich, daß die Verbrennungslage einfacher zu berechnen ist und daß auch bei niedriger Belastung der Brennkraftmaschine eine eindeutige Zuordnung von Verbrennungslage und Kurbelwinkel bei geändertem Zündwinkel möglich ist. Die zur Bestimmung der Verbrennungslage herangezogenen Druckmaxima sind in allen Bereichen, also von hohen Belastungen bis zum Leerlauf, eindeutig über eine Änderung des Zündwinkels verschiedenen Verbrennungslagen zuordenbar. Es ist also ohne weiteres möglich, durch die Änderung des Zündwinkels die Lage der Verbrennung so zu regeln, daß sie einem bestimmten, als optimal ermittelten Kurbelwinkel zuzuordnen ist.

Dies wird dadurch erreicht, daß zunächst der Maximalwert des berechneten Verbrennungsdrucks $p^*(\alpha)$ sowie der zugehörige Kurbelwinkel $\alpha^*_{max}$ ermittelt werden. Der Zündwinkel wird nun so verändert, daß der Maximalwert des Verbrennungsdrucks bei einem gewünschten Kurbelwinkel auftritt. In diesem Fall stimmt dann $\alpha^*_{max}$mit dem gewünschten Kurbelwinkel überein.

Besonders vorteilhaft ist es für dieses Verfahren zur Regelung des Zündwinkels, wenn die während der Kompressionsphase ermittelten Werte des Brennraumdrucks, also der Kompressionsdruck $p_k(\alpha)$ gespeichert und die dadurch bestimmte Kurve bei Erreichen eines vorgegebenen Winkels, beispielsweise beim oberen Totpunkt, umgeklappt bzw. gespiegelt wird, so daß sich eine symmetrische Kurve für den Kompressionsdruck ergibt. Diese wird dann zur Berechnung des Verlaufs des Verbrennungsdrucks $p^*(\alpha)$ herangezogen, der der Ermittlung der Verbrennungslage dient. Durch dieses Verfahren wird eine besonders einfache Steuerung erreicht.

Zur Erläuterung zweier Ausführungsarten des Verfahrens wird hier auf die Figuren 1 bis 6 Bezug genommen.

Figur 1 zeigt ein Diagramm, in dem die Lage des Maximums des Brennraumdrucks über der Lage der Verbrennung, der Verbrennungslage, aufgezeichnet ist. Druckmaximum und Verbrennungslage sind über dem Kurbelwinkel $\alpha$ aufgetragen, wobei durch Definition festgelegt ist, daß beim oberen Totpunkt während der Verbrennungsphase der Kurbelwinkel $\alpha$ den Wert Null annimmt.

Auch hier ist die Verbrennungslage dadurch definiert, daß 50% der Energie des Zylinderladung umgesetzt sind.

Die Kurve 1 ist bei hoher Belastung der Brennkraftmaschine aufgenommen, die Kurve 2 bei einem niedrigen Lastzustand des Motors. Es ist ersichtlich, daß die Zuordnung zwischen der Lage des Druckmaximums und der Lage der Verbrennung bei der Kurve 1 in einem weiten Bereich eindeutig ist. Dies ist bei Kurve 2 nicht der Fall. Die beiden Kurven 1 und 2 wurden mit einem herkömmlichen Meßverfahren aufgenommen.

Die Kurven 1* und 2* sind dagegen mit einem erfindungsgemäßen Verfahren aufgenommen worden. Sie geben die Lage der Maxima der mit Hilfe des erfindungsgemäßen Verfahrens gewonnenen Verbrennungsdruckwerte wieder. Es wird deutlich, daß die Zuordnung zwischen der Lage des Druckmaximums und der Lage der Verbrennung hier auch bei niedriger Belastung der Brennkraftmaschine über einen weiten Bereich eindeutig ist. Der Bereich der eindeutigen Zuordnung ist überdies für einen hohen Lastzustand, wie er durch die Kurve 1* wiedergegeben ist, erweitert. Die Kurve 2* gibt einen Zustand geringer Belastung der Brennkraftmaschine wieder. Die Druckwerte für die Kurven 1* und 2* werden nach dem oben beschriebenen Verfahren gewonnen.

Anstelle des aktuellen, sich in Abhängigkeit von der Kurbelstellung bzw. dem Kurbelwinkel $\alpha$ ändernden Brennraumdrucks $p(\alpha)$ wird der Verbrennungsdruck $p^*(\alpha)$ berechnet. Dazu wird der Verlauf des Kompressionsdrucks $p_k(\alpha)$ ermittelt, nämlich der Druck, der in Abhängigkeit vom Kurbelwinkel $\alpha$ im reinen Kompressor-Betrieb der Brennkraftmaschine, also ohne Einwirkung der Zündung auftritt. Der Kompressionsdruck wird vom tatsächlichen Brennraumdruck abgezogen, so daß sich der Verbrennungsdruck $p^*(\alpha)$ der oben angegebenen Gleichung (1) ergibt.

Aus dem Verlauf des Verbrennungsdrucks $p^*(\alpha)$ wird auf beliebige Weise die Lage des Maximalwerts bezüglich des Kurbelwinkels ermittelt. Der zugehörige Kurbelwinkel wird mit $\alpha^*_{max}$ bezeichnet. Die Lage des auf diese Weise gewonnenen Maximalwerts des Verbrennungsdrucks ist für hohe Belastungen in der Kurve 1* und für einen niedrigen Lastzustand in der Kurve 2* in Figur 1 dargestellt. Dabei ist die Lage des Maximalwerts des Verbrennungsdrucks jeweils der Verbrennungslage zugeordnet.

Figur 2 zeigt den zugehörigen Ablaufplan, der im folgendem erläutert wird:

Für jeden Kurbelwinkel $\alpha$ wird aus einer Tabelle, bzw. aus einem Speicher S der zugehörige Wert der in Gleichung (3) gegebenen Funktion $c(\alpha)$ abgerufen und mit dem bei einem vorgegebenen Winkel $\alpha_1$ gemessenen Wert des Kompressionsdrucks $p_k(\alpha 1)$ multipliziert. Der so erhaltene Kompressionsdruck $p_k(\alpha)$ wird zur Ermittlung des Verbrennungsdrucks $p^*(\alpha)$ von dem tatsächlichen Brennraumdruck $p(\alpha)$ subtrahiert.

In einem nächsten Schritt wird der Maximalwert des Verbrennungsdrucks $p^*_{max}$ bestimmt. Überdies wird der zugehörige Kurbelwinkel $\alpha^*_{max}$ bestimmt, bei dem das Druckmaximum auftritt.

Eine weitere Ausführungsform des Verfahrens wird an hand der Figuren 3 und 4 erläutert:

Zur Ermittlung des Kompressionsdrucks, der hier mit $p_s(\alpha)$ bezeichnet wird, werden die Werte des Brennraumdrucks $p(\alpha)$, die vor Erreichen eines vorgegebenen Kurbelwinkels, beispielsweise des oberen Totpunkts, gemessen werden, mit dem zugehörigen Kurbeiwinkel gespeichert. Die sich so ergebende Druckverlaufskurve wird bei Erreichen des oberen Totpunkts "umgeklappt", das heißt, an einer den Totpunkt schneidenden Achse gespiegelt und ebenfalls im Speicher abgelegt. Der Verlauf des gespeicherten Kompressionsdrucks $p_s(\alpha)$ ist in Figur 4 gepunktet dargestellt. Aus dieser Darstellung ist ersichtlich, daß bis Erreichen des oberen Totpunkts der Brennraumdruck $p(\alpha)$ und der Kompressionsdruck $p_s(\alpha)$ identisch sind.

Auch bei dieser Ausführungsform des Verfahrens wird zur Ermittlung des Verbrennungsdrucks $p^*(\alpha)$ der Kompressionsdruck $p_s(\alpha)$ von dem tatsächlichen im Brennraum vorherrschenden Druck subtrahiert, so daß sich die folgende Gleichung (5) ergibt:

$$p^*(\alpha) = p(\alpha) - p_s(\alpha). \quad (5)$$

Die Werte von $p_s(\alpha)$ werden aus dem Speicherglied S abgerufen.

Dies ist aus Figur 3 ersichtlich, die den Ablaufplan dieses Verfahrens wiedergibt. Gemäß dieser Darstellung werden die Werte des Brennraumdrucks $p(\alpha)$ dem Speicherglied S in Abhängigkeit vom Kurbelwinkel $\alpha$ eingegeben. Nach Erreichen des vorbestimmbaren Kurbelwinkels, hier des oberen Totpunkts, werden die aufgrund der Kurvenspiegelung erhaltenen Werte als $p_s(\alpha)$ aus dem Speicher S abgerufen. Um den Verbrennungsdruck $p^*(\alpha)$ zu erhalten, wird gemäß Gleichung (5) die Differenz zwischen $p(\alpha)$ und $p_s(\alpha)$ ermittelt.

Der Verlauf der Kurve des Verbrennungsdrucks $p^*(\alpha)$ bei niedriger Last, nämlich bei Leerlauf, ist in Figur 4 gestrichelt dargestellt. Wie bei der oben beschriebenen Ausführungsform des Verfahrens werden hier der Maximalwert des Verbrennungsdrucks also $p^*_{max}$ und der zugehörige Kurbelwinkel $\alpha^*_{max}$ermittelt.

Aus Figur 4 ist deutlich ersichtlich, welche Vorteile dieses Verfahren gegenüber herkömmlichen hat. Der mit einer durchgezogenen Linie dargestellte Verlauf des Brennraumdrucks $p(\alpha)$ erreicht beim oberen Totpunkt seinen Maximalwert und weist anschließend im abfallenden Teil der Kurve lediglich eine Unregelmäßigkeit auf, das heißt die Kurve fällt nicht kontinuierlich ab. Aus dieser Kurve ist die Verbrennungslage mittels einer Maximalwertanalyse nicht erfaßbar.

Wenn man dagegen den gestrichelt eingezeichneten Verlauf des Verbrennungsdrucks $p^*(\alpha)$ betrachtet, so ist hier ohne weiteres ein eindeutiges Maximum feststellbar. Aus der Lage des Maximalwerts kann ohne weiteres auf die Verbrennungslage rückgeschlossen werden. Die Vorteile dieses Verfahrens lassen sich anhand der Figuren 5 und 6 erläutern.

Figur 5 zeigt den Verlauf des Brennraumdrucks $p(\alpha)$ und des berechneten Verbrennungsdruck $p^*(\alpha)$ über dem Kurbelwinkel $\alpha$ während eines hohen Lastzustands. Bei dieser Darstellung wird, wie auch in Figur 6, zwischen dem Druck $p_1(\alpha)$ und $p_1(\alpha)$ bzw. $p^*_2(\alpha)$ und $p^*_2(\alpha)$ unterschieden. Der abweichende Druckverlauf zwischen $p_1$ und $p_2$ bzw. zwischen $p^*_1$ und $p^*_2$ beruht auf einer Änderung des Zündwinkels. Er ist bei $p_2$ bzw. $p^*_2$ gegenüber $p_1$ bzw. $p^*_1$ um 20°KW nach spät verschoben. Durch senkrechte Striche in den verschiedenen Kurven sind die Maxima der Druckkurven markiert. Es wird deutlich, daß bei Änderung des Zündwinkels um 20°KW die Verschiebung der Maxima bei dem Verlauf des Brennraumdrucks $p_1(\alpha)$ und $p_2(\alpha)$ geringer ausfällt, als bei dem Verlauf des Verbrennungsdrucks $p^*_1(\alpha)$ und $p^*_2(\alpha)$. Das heißt also, eine auf dem erfinderischen Verfahren beruhende Regelung der Lage der Verbrennung bzw. der Druckmaxima mit Hilfe des Zündwinkels bei hohem Lastzustand ist effektiver als bei herkömmlichen Verfahren.

Noch deutlicher werden die Vorteile des erfindungsgemäßen Verfahrens bei niedrigen Lastzuständen der Brennkraftmaschine.

Aus den in Figur 6 dargestellten Kurvenverläufen ist ersichtlich, daß sich die Maxima des Brennraumdrucks $p_1(\alpha)$, $p_2(\alpha)$ praktisch nicht verlagern, wenn der Zündwinkel bei der Messung $p_2(\alpha)$ gegenüber der Messung von $p_1(\alpha)$ um 20°KW nach spät verschoben wurde. Dagegen sind die Maxima der Verbrennungsdruckverläufe $p^*_1(\alpha)$ und $p^*_2(\alpha)$ deutlich unterscheidbar. Das heißt, bei diesem Verfahren kann durch eine Änderung des Zündwinkels die Lage der Verbrennung bzw. die Lage der Druckmaxima so verschoben werden, bis die Lage der Verbrennung bzw. das Druckmaximum bei dem gewünschten Kurbelwinkel liegen.

Es ist noch festzustellen, daß bei der Bestimmung des Kompressionsdrucks mittels des Ansatzes der polytropen Verdichtung bzw. Expansion der Absolutdruck erfaßt werden muß. Überdies eignen sich viele Druckaufnehmer nicht zur statischen Druckmessung. Daher wird anstelle des Absolutdrucks der während der Ansaugphase herrschende Druck im Saugrohr der Brennkraftmaschine erfaßt und anhand dieses Werts der Druckaufnehmer bei jedem Ansaugvorgang auf "0" gesetzt. Der Beginn der Ansaugphase ist in Figur 4 an den treppenförmigen Druckabfall rechts im Diagramm erkennbar.

Das Verfahren der Spiegelung des Verlaufs des Kompressionsdrucks ist dann ungeeignet, wenn schon vor Erreichen des oberen Totpunkts ein auf der Verbrennung beruhender wesentlicher Druckanstieg erfolgt. In diesem Fall müßte der Kompressionsdruck in einem getrennten Verfahren ermittelt und gespeichert werden.

Die mit dem Verfahren zur Ermittlung des Verbrennungsdrucks einer Brennkraftmaschine gewonnenen Druckwerte können auch zur Überwachung einer Brennkraftmaschine ausgewertet werden.

Bei bekannten Verfahren zur Überwachung einer Brennkraftmaschine beispielsweise zur Ermittlung von zyklischen Verbrennungsschwankungen sowie von Verbrennungsaussetzern bei einer Brennkraftmaschine wird der indizierte Mitteldruck bestimmt. Dies ist sehr aufwendig, besonders bei Verfahren, bei denen die Motorüberwachung in Echtzeit erfolgt.

Bei einem weiteren bekannten Verfahren zur Überwachung einer Brennkraftmaschine wird das Druckmaximum bestimmt. Insbesondere im niedrigen Lastbereich der Brennkraftmaschine ist keine Aussage mehr über die zyklischen Verbrennungsschwankungen möglich, da in diesem Betriebsbereich, wie oben dargelegt, der Kompressionsdruck dominiert und demgegenüber Drucksteigerungen durch die chemischen Umsetzungsvorgänge im Brennraum nur noch gering ist. Auch die Bestimmung von Verbrennungsaussetzern ist deshalb schwierig. Um Aussetzer und Verbrennung unterscheiden zu können, ist eine hohe Absolutgenauigkeit der Drucksensoren erforderlich, die bei einfachen Aufnehmern nicht gegeben ist.

Wenn das oben beschriebene Verfahren zur Ermittlung des Verbrennungsdrucks zur Überwachung einer Brennkraftmaschine herangezogen wird, so ergibt sich der Vorteil, daß zur Bestimmung von Verbrennungsaussetzern Drucksensoren mit einer relativ geringen Genauigkeit eingesetzt werden können, da lediglich das Vorzeichen, nicht die Absoluthöhe des Drucks ausgewertet werden muß.

Wenn die mit dem beschrieben Verfahren zur Ermittlung des Verbrennungsdrucks gewonnenen Werte zur Überwachung einer Brennkraftmaschine ausgewertet werden, beispielsweise zur Ermittlung der zyklischen Schwankungen der von der Brennkraftmaschine abgegebenen Arbeit, so werden die zyklischen Schwankungen des Maximalwerts des Verbrennungsdrucks $p^*(\alpha)$ ermittelt.

Es ist aber auch möglich, den Verbrennungsdruck $p^*(\alpha)$ über einen Kurbelwinkelbereich zu integrieren, der sich von einem Kurbelwinkel vor dem oberen Totpunkt in der Arbeitsphase bis zu einem Winkel nach diesem oberen Totpunkt erstreckt. Auch hier werden die zyklischen Schwankungen dieses Integralwerts $P^*_I$ ermittelt.

Sollen bei der Überwachung einer Brennkraftmaschine Verbrennungsaussetzer ermittelt werden, so wird das Vorzeichen des Integralwerts $P^*_I$ oder das des Maximalwerts $p^*_{max}$ des Verbrennungsdruckwerts ermittelt. Zur Erfassung des Maximalwerts $p^*_{max}$ des Verbrennungsdruckwerts wird der Verlauf des Verbrennungsdrucks wenigstens innerhalb eines den Arbeitstak umfassenden Zycklusses, also wenigstens innerhalb eines Kurbelwinkelbereichs von 180° ermittelt. Sobald der Integralwert oder der Maximalwert des Verbrennungsdrucks einen negativen Wert annimmt, so kann daraus geschlossen werden, daß ein Verbrennungsaussetzer vorliegt.

Besonders einfach läßt sich aus einem Verbrennungsdruck-Integralwert $P^*_I$ auf den Verbrennungsdruck rückschließen und zwar mit Hilfe von zwei Integrationen. Die Integrationsbereiche erstrecken dabei sich über einen bestimmten Kurbelwinkelbereich von beispielsweise 60°. Für die erste Integration wird von einem vorbestimmten Kurbelwinkel, beispielsweise vom oberen Totpunkt $\alpha_0$ des Arbeitszyklus' ausgegangen, und beim zweiten Integral bis zu diesem Winkel integriert. Auf diese Weise ergibt sich ein Integralwert $P^*_I$ nach folgender Gleichung (6):

$$P^*_I = \int_{\alpha_0}^{\alpha_0+\alpha_1} p(\alpha)\, d\alpha - \int_{\alpha_0-\alpha_1}^{\alpha_0} p(\alpha)\, d\alpha \qquad (6)$$

Diese Vereinfachung ist deshalb möglich, weil sich der Differenzdruckverlauf durch die Differenz zweier Flächen ausdrücken läßt, wobei ersatzweise eine Spiegelung des Druckverlaufs am oberen Totpunkt des Arbeitszyklus' möglich ist.

Zu Verdeutlichung des Verfahrens zur Überwachung einer Brennkraftmaschine dienen die Figuren 7 bis 9.

In Figur 7 wird noch einmal vereinfacht dargestellt, wie aus dem Verbrennungsdruckverlauf $p^*(\alpha)$ der Maximalwert $p^*_{max}$ sowie der zugehörige Kurbelwinkel $\alpha^*_{max}$ gewonnen wird.

Der Ablaufplan gemäß Figur 8 verdeutlicht ein Verfahren zur Überwachung einer Brennkraftmaschine, wobei anhand der zyklischen Schwankungen des Integralwerts $P^*_I(\alpha)$ oder des Maximalwerts $p^*_{max}$ des Verbrennungsdruckverlaufs die zyklischen Schwankungen der vom Motor abgegebenen Arbeit ermittelt werden. Die zyklischen Schwankungen der beiden Druckwerte können beispielsweise durch die Standardabweichung, den Variationskoeffizienten oder generell durch die Schwankungsbreite erfaßt werden. Die zyklischen Schwankungen der abgegebenen Arbeit können dann für die Motorüberwachung oder für eine Laufruheregelung herangezogen werden.

Dazu wird aus dem Verbrennungsdruckwert $p^*(\alpha)$ zunächst der Winkel $\alpha^*_{max}$ ermittelt, bei dem der Verlauf des Verbrennungsdrucks innerhalb eines den Arbeitstakt umfassenden Zyklusses, also innerhalb eines Kurbelwinkelbereichs von 180°, ein Maximum annimmt. Einem Integrator I werden außer dem aktuellen Kurbelwinkel $\alpha$ und dem Ersatzdruckwert $p^*(\alpha)$ zwei einen Integrationsbereich festlegende Kurbelwellenwinkel $\alpha_1$ und $\alpha_2$ eingegeben. Durch diese Integration wird der Integralwert $P^*_I$ berechnet. Bei dieser Integration ergibt sich der in Gleichung (7) wiedergegebene Integralwert:

$$P^*_I = \int_{\alpha_1}^{\alpha_2} p^*(\alpha)\, d\alpha. \qquad (7)$$

Es wird dabei festgelegt, daß der Ausgangswert $\alpha_1$ des Kurbelwinkels kleiner oder gleich ist wie der obere Totpunkt während des Arbeitszyklus'. Für den zweiten Winkel $\alpha_2$ wird ein Winkel oberhalb des oberen Totpunkts während der Arbeitsphase gewählt, beispielsweise ein Winkel von 60°.

Aus dem Ablaufplan gemäß Figur 9 ist noch einmal ersichtlich, daß sich der Integralwert des Verbrennungsdruckverlaufs $P^*_I$ auf direktem Weg aus dem Brennraumdruck $p(\alpha)$ bestimmen läßt, ohne daß eine Zwischenberechnung des Verbrennungsdruckverlaufs $p^*(\alpha)$ zu erfolgen braucht.

Mit Hilfe des Ablaufplans in Figur 9 läßt sich also die Gleichung (6) realisieren. Dazu werden einem ersten Integrator $I_1$ der Brennraumdruck $p(\alpha)$ sowie die Kurbelwinkel $\alpha_0$ und $\alpha_0 + \alpha_1$ eingegeben. Darüber hinaus wird der laufende Kurbelwinkel $\alpha$ eingegeben.

Einem zweiten Integrator $I_2$ werden außer dem Brennraumdruck $p(\alpha)$ und dem aktuellen Kurbelwinkel $\alpha$ zwei Winkelwerte eingegeben, nämlich $\alpha_0 - \alpha_1$ und $\alpha_0$. Das Ergebnis des zweiten Integrators wird von dem des ersten abgezogen, so daß sich der Wert $P^*_I$ ergibt, wie dies in Gleichung (6) wiedergegeben ist.

Der auf diese Weise gewonnene Integralwert kann, wie oben dargestellt, zur Steuerung und Überwachung einer Brennkraftmaschine ausgewertet werden. Durch die Möglichkeit der Erkennung zyklischer Schwankungen der abgegebenen Motorarbeit und von Verbrennungsaussetzern wird hier auch ein Verfahren zur Verfügung gestellt, mit dem ein Schutz für im Abgasstrom der Brennkraftmaschine angeordnete Katalysatoren geschaffen wird.

Aufgrund der berechneten Werte des Verbrennungsdrucks ist eine Diagnose der Brennkraftmaschine möglich, insbesondere können Drehmomentanteile der einzelnen Zylinder erfaßt werden. Dabei werden die Maximalwerte $p^*_{max}$ des Verbrennungsdrucks $P^*(\alpha)$ oder der Integralwert $p^*_I$ als Ersatzgrößen für die Drehmomentanteile herangezogen. Entsprechend lassen sich die Unterschiede der zyklischen Schwankungen der Drehmomentanteile der einzelnen Zylinder bestimmen. Aus den unterschiedlichen Drehmomentanteilen oder den verschiedenen zyklischen Schwankungen der Drehmomentanteile der einzelnen Zylinder läßt sich eine zylinderspezifische Regelung ableiten, die z.B. die Zündung, die Gemischaufbereitung, die Einspritzmenge und den Einspritzbeginn bei Dieselmotoren so beeinflußt, daß sich gleiche Drehmomentanteile bzw. gleiche zyklische Schwankungen der einzelnen Zylinder ergeben. Durch die auf diese Weise erzielte Gleichstellung der Zylinder läßt sich ein besonders ruhiger, gleichmäßiger Motorlauf erzielen und eine Laufruheregelung verwirklichen.

## Patentansprüche

1. Verfahren zur Ermittlung des Verbrennungsdrucks einer Brennkraftmaschine durch folgende Schritte:
– Der im normalen Betrieb der Brennkraftmaschine entstehende Brennraumdruck ($p(\alpha)$) in Abhängigkeit vom Kurbelwinkel ($\alpha$) und der im reinen Kompressionsbetrieb im Brennraum entstehende Kompressionsdruck ($p_k(\alpha)$) werden erfaßt;
– zur Bestimmung des Verbrennungsdruckverlaufs ($P^*(\alpha)$) in Abhängigkeit vom Kurbelwinkel ($\alpha$) wird die Differenz zwischen dem Brennraumdruck ($p(\alpha)$) und dem Kompressiondsdruck ($p_k(\alpha)$) gebildet,
– wobei zur Ermittlung des Kompressionsdrucks ($p_k(\alpha)$) der Brennraumdruck ($p(\alpha)$) eines Kolbens bis zur Erreichung eines bestimmten Kurbelwinkels in Abhängigkeit von Kurbelwinkel ($\alpha$) gemessen und gespeichert wird, daß der gespeicherte Kurvenverlauf an einer durch einen Kurbelwinkel bestimmten Achse gespiegelt wird, indem die vor Erreichen des bestimmten Kurbelwinkels gespeicherten Werte symmetrisch zur Achse abgerufen werden, und
– daß als bestimmter Kurbelwinkel der obere Totpunkt eines Kolbens gewählt wird und/oder daß die Achse durch den oberen Totpunkt bestimmt wird.

2. Verfahren zur Überwachung und/oder Regelung einer Brennkraftmaschine unter Auswertung der nach einem Verfahren gemäß Anspruch 1 gewonnenen Verbrennungsdruckwerte, gekennzeichnet durch folgende Schritte:
– Es wird der im normalen Betrieb der Brennkraftmaschine entstehende Brennraumdruck ($p(\alpha)$) in Abhängigkeit vom Kurbelwinkel ($\alpha$) erfaßt,
– anschließend wird ein Verbrennungsdruck-Integralwert ($P^*_I$) ermittelt, indem der Brennraumdruck über zwei Kurbelwinkelbereiche integriert und die Differenz dieser Integralwerte gebildet wird, wobei die Kurbelwinkelbereiche symmetrisch zu einem vorgebbaren Kurbelwinkel ($\alpha_0$) liegen.

3. Verfahren nach Anspruch 2, dadurch gekennzeichnet, daß als vorgebbarer Kurbelwinkel ($\alpha_0$) der obere Totpunkt eines Zylinders (ZOT) während eines Arbeitszyklus gewählt wird.

4. Verfahren nach Anspruch 3 oder 4, dadurch gekennzeichnet, daß sich der Kurbelwinkelbereich von einem ersten Winkel ($\alpha_1$) vor einem bestimmten Kurbelwinkel, vorzugsweise dem oberen Totpunkt während der Arbeitsphase bis zu einem zweiten Winkel ($\alpha_2$) nach dem bestimmten Kurbelwinkel erstreckt.

5. Verfahren nach einem der Ansprüche 2 bis 4, dadurch gekennzeichnet, daß der Verbrennungsdruck-Integralwert ($P^*_I$) zur Erfassung von Verbrennungsaussetzern und/oder zur Steuerung der Laufruhe der Brennkraftmaschine bei Auswertung der zyklischen Schwankungen des Integralwerts dient.

6. Verfahren nach Anspruch 5, dadurch gekennzeichnet, daß zur Verwirklichung einer Laufruheregelung der Verbrennungsdruck-Integralwert ($P^*I$) der einzelnen Zylinder der Brennkraftmaschine durch eine zylinderspezifische Regelung aneinander angeglichen wird.

7. Verfahren nach einem der Ansprüche 2 bis 5, dadurch gekennzeichnet, daß zur Ermittlung von Verbrennungsaussetzern das Vorzeichen des Verbrennungsdruck-Integralwerts ($P^*_I$) ermittelt wird, wobei negative Werte einen Verbrennungsaussetzer anzeigen.

8. Verfahren zur Überwachung und/oder Regelung einer Brennkraftmaschine unter Auswertung des nach dem Verfahren gemäß Anspruch 1 gewonnenen Verbrennungsdrucks, dadurch gekennzeichnet, daß der Maximalwert ($P^*_{max}$) des Verbrennungsdrucks und der bei diesem Wert gegebene Kurbelwinkel ($\alpha^*_{max}$) ermittelt wird und diese Werte der Laufruheregelung der Brennkraftmaschine über die Erfassung der zyklischen Schwankungen der Werte, der Feststellung von Verbrennungsaussetzern, der zylinderspezifischen Regelung, oder der Regelung des Zündwinkels dienen.

9. Verfahren nach Anspruch 8, dadurch gekennzeichnet, daß zur Ermittlung von Verbrennungsaussetzern lediglich das Vorzeichen des Maximalwerts des Verbrennungsdrucks ($P^*_{max}$) ermittelt wird, wobei negative Werte einen Verbrennungsaussetzer anzeigen.

## Claims

1. Process for establishing the combustion pressure of an internal combustion engine by the following steps:
– the combustion chamber pressure ($p(\alpha)$) arising in normal operation of the internal combustion engine as a function of the crank angle ($\alpha$) and the compression pressure ($p_k(\alpha)$) arising in the combustion chamber in the pure compression mode are recorded;
– to establish the combustion pressure variation ($P^*(\alpha)$) as a function of the crank angle ($\alpha$), the difference between the combustion chamber pressure ($p(\alpha)$) and the compression pressure ($p_k(\alpha)$) is formed,
– to establish the compression pressure ($p_k(\alpha)$), the combustion chamber pressure ($p(\alpha)$) of a piston up to

a point when a particular crank angle is reached being measured and stored as a function of crank angle ($\alpha$), in that the stored curve is reflected in an axis, determined by a crank angle, by the values stored prior to the reaching of the particular crank angle being called symmetrically to the axis and

– in that the top dead centre of a piston is chosen as the particular crank angle and/or in that the axis is determined by the top dead centre.

2. Process for monitoring and/or controlling an internal combustion engine by evaluating the combustion pressure values obtained by a process in accordance with Claim 1, characterised by the following steps:

– The combustion chamber pressure ($p(\alpha)$) arising in normal operation of the internal combustion engine is recorded as a function of the crank angle ($\alpha$),

– a combustion pressure integral value ($P^*_I$) is then established by the combustion chamber pressure being integrated over two crank angle ranges and the difference of these integral values being formed, the crank angle ranges lying symmetrically to a predeterminable crank angle ($\alpha_0$).

3. Process according to Claim 2, characterised in that the top dead centre of a cylinder (ZOT) during a working cycle is chosen as predeterminable crank angle ($\alpha_0$).

4. Process according to Claim 3 or 4, characterised in that the crank angle range extends from a first angle ($\alpha_1$) before a particular crank angle, preferably the top dead centre during the working phase, to a second angle ($\alpha_2$) after the particular crank angle.

5. Process according to one of Claims 2 to 4, characterised in that the combustion pressure integral value ($P^*_I$) serves for the detection of misfires and/or for control of the smoothness of running of the internal combustion engine in the case of evaluation of the cyclical fluctuations of the integral value.

6. Process according to Claim 5, characterised in that, to achieve control of smoothness of running, the combustion pressure integral value ($P^*_I$) of the individual cylinders of the internal combustion engine is matched by cylinder-specific control.

7. Process according to one of Claims 2 to 5, characterised in that, to detect misfires, the sign of the combustion pressure integral value ($P^*_I$) is ascertained, negative values indicating a misfire.

8. Process for monitoring and/or controlling an internal combustion engine by evaluating the combustion pressure obtained by the process in accordance with Claim 1, characterised in that the maximum value ($P^*_{max}$) of the combustion pressure and the crank angle ($\alpha^*_{max}$) at this value is established and these values serve for control of the smoothness of running of the internal combustion engine via the recording of the cyclical fluctuations of the values, for the detection of misfires, for cylinder-specific control or for control of the ignition angle.

9. Process according to Claim 8, characterised in that, to detect misfires, only the sign of the maximum value of the combustion pressure ($P^*_{max}$) is ascertained, negative values indicating a misfire.

## Revendications

1. Procédé de détection de la pression de combustion d'un moteur à combustion interne grâce aux étapes suivantes :

– on enregistre la pression de la chambre de combustion ($p(\alpha)$) qui se produit quand le moteur à combustion interne est en fonctionnement normal en fonction de l'angle de vilebrequin ($\alpha$) et de la pression de compression ($p_k(\alpha)$) se produisent dans la chambre de combustion pendant le fonctionnement en compression pure ;

– pour déterminer le tracé de la pression de combustion ($P^*(\alpha)$) en fonction de l'angle de vilebrequin ($\alpha$) on forme la différence entre la pression de la chambre de combustion ($p(\alpha)$) et la pression de compression ($p_k(\alpha)$) ;

– tandis que pour détecter la pression de compression ($p_k(\alpha)$) la pression de la chambre de combustion ($p(\alpha)$) d'un piston est mesurée et mise en mémoire jusqu'à ce que soit obtenu un angle déterminé du vilebrequin en fonction de l'angle de vilebrequin ($\alpha$), telle façon que le tracé des courbes mises en mémoire est mise en symétrie par rapport à un axe déterminé par un angle de vilebrequin, alors que les valeurs mises en mémoire avant que l'angle de vilebrequin déterminé ne soit atteint sont mises en place symétriquement par rapport à l'axe ;

– on choisit comme angle de vilebrequin déterminé le point mort haut d'un piston et/ou on détermine l'axe par le point mort haut.

2. Procédé de surveillance et/ou de régulation d'un moteur à combustion interne basé sur l'exploitation des valeurs de pression de combustion obtenues par un procédé selon la revendication 1, caractérisé par les étapes suivantes :

– on enregistre la pression de la chambre de combustion ($p(\alpha)$), en fonction de l'angle de vilebrequin ($\alpha$), qui se produit en fonctionnement normal du moteur à combustion interne ;

– ensuite on détermine une valeur d'intégrale ($P^*_I$) de la pression de combustion, en intégrant la pression de la chambre de combustion sur deux zones angulaires du vilebrequin et en formant la différence de ces valeurs d'intégrale, les zones angulaires de vilebrequin étant mise en symétrie par rapport à un angle de vilebrequin ($\alpha_0$) pouvant être prédéfini.

3. Procédé selon la revendication 2, caractérisé en ce que l'on choisit comme angle de vilebrequin pouvant être défini ($\alpha_0$) le point mort haut d'un cylindre (ZOT) pendant un cycle de travail.

4. Procédé selon la revendication 3 ou 4, caractérisé en ce que la zone angulaire de vilebrequin s'étend d'un premier angle ($\alpha_1$) avant un angle de vilebrequin déterminé, de préférence le point mort haut pendant la phase de travail jusqu'à un deuxième angle ($\alpha_2$) après l'angle de vilebrequin déterminé.

5. Procédé selon l'une des revendications 2 à 4, caractérisé en ce que la valeur d'intégrale ($P^*_I$) de la pression de combustion pour enregistrer des ratés de combustion et/ou pour commander la stabilité de marche du moteur à combustion interne sert à l'exploitation des oscillations cycliques de la valeur d'intégrale.

6. Procédé selon la revendication 5, caractérisé en ce que, pour réaliser une régulation de la stabilité de marche, la valeur d'intégrale ($P^*_I$) des différents cylindres du moteur à combustion interne est compensée par une régulation spécifique à chaque cylindre.

7. Procédé selon l'une des revendications 2 à 5, caractérisé en ce que pour détecter des ratés de combustion on détecte le signe de la valeur d'intégrale ($P^*_I$) de la pression de combustion, des valeurs négatives indiquant un raté de combustion.

8. Procédé de surveillance et/ou de régulation d'un moteur à combustion interne reposant sur l'exploitation de la pression de combustion obtenue par le procédé selon la revendication 1, caractérisé en ce que la valeur maximale ($P^*_{max}$) de la pression de combustion et l'angle de vilebrequin ($\alpha^*_{max}$) donné par cette valeur sont enregistrés et ces valeurs servent à la régulation de la stabilité de marche du moteur à combustion interne au moyen de l'enregistrement des oscillations cycliques des valeurs, de la détermination de ratés de combustion, de la régulation spécifique à chaque cylindre ou de la régulation de l'angle d'allumage.

9. Procédé selon la revendication 8, caractérisé en ce que pour détecter des ratés de combustion on détecte uniquement le signe de la valeur maximale de la pression de combustion ($P^*_{max}$), des valeurs négatives indiquant un raté de combustion.

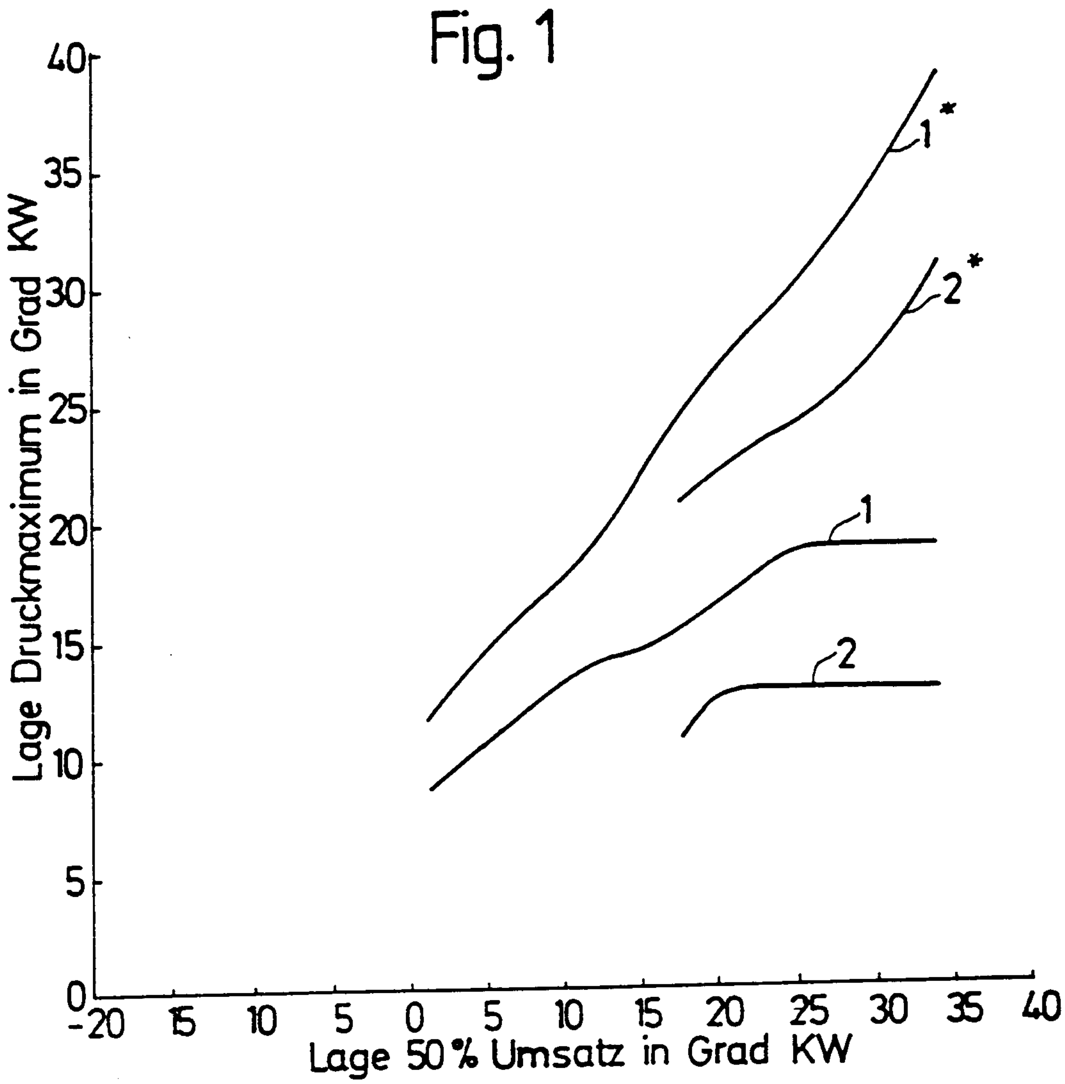
Fig. 1
Lage Druckmaximum in Grad KW
Lage 50 % Umsatz in Grad KW
0
5
10
15
20
25
30
35
40
-20
15
10
5
0
5
10
15
20
25
30
35
40
1*
2*
1
2

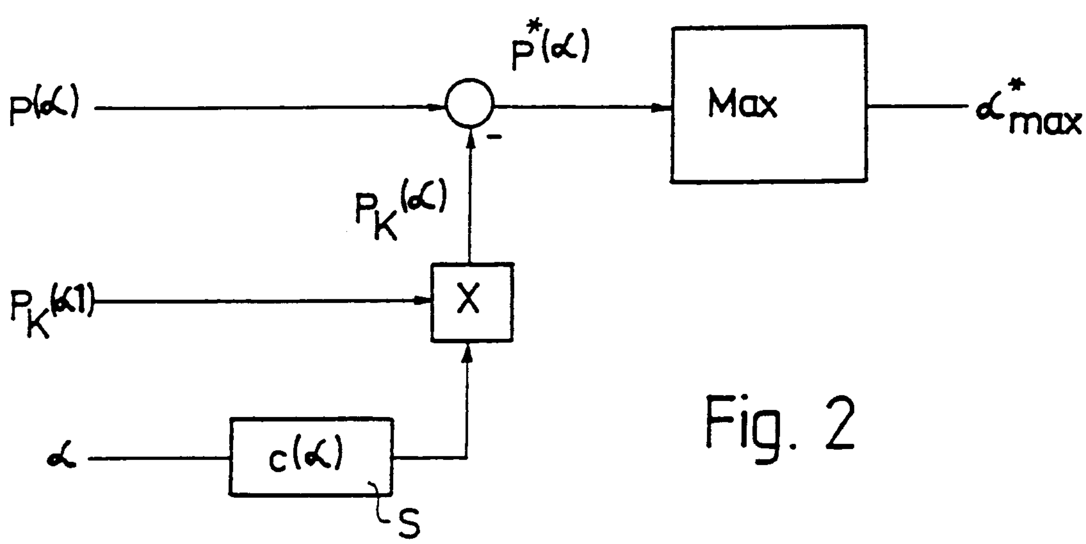
P(α)
P*(α)
Max
α*max
-
PK(α)
PK(α1)
X
α
c(α)
S
Fig. 2

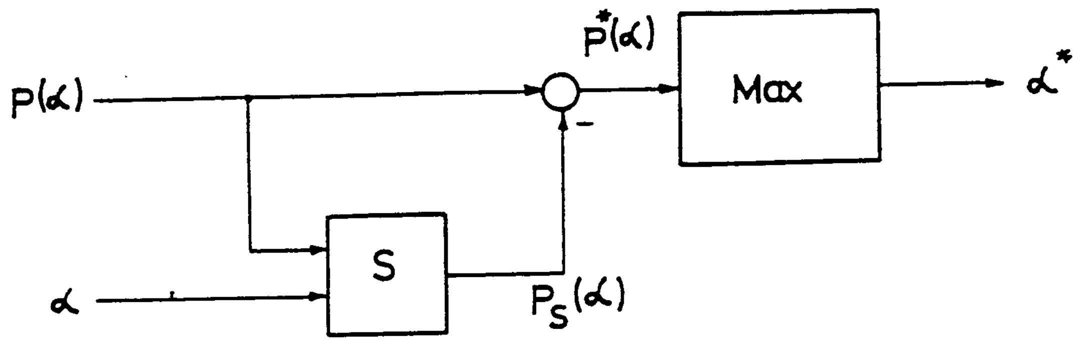


Fig. 3

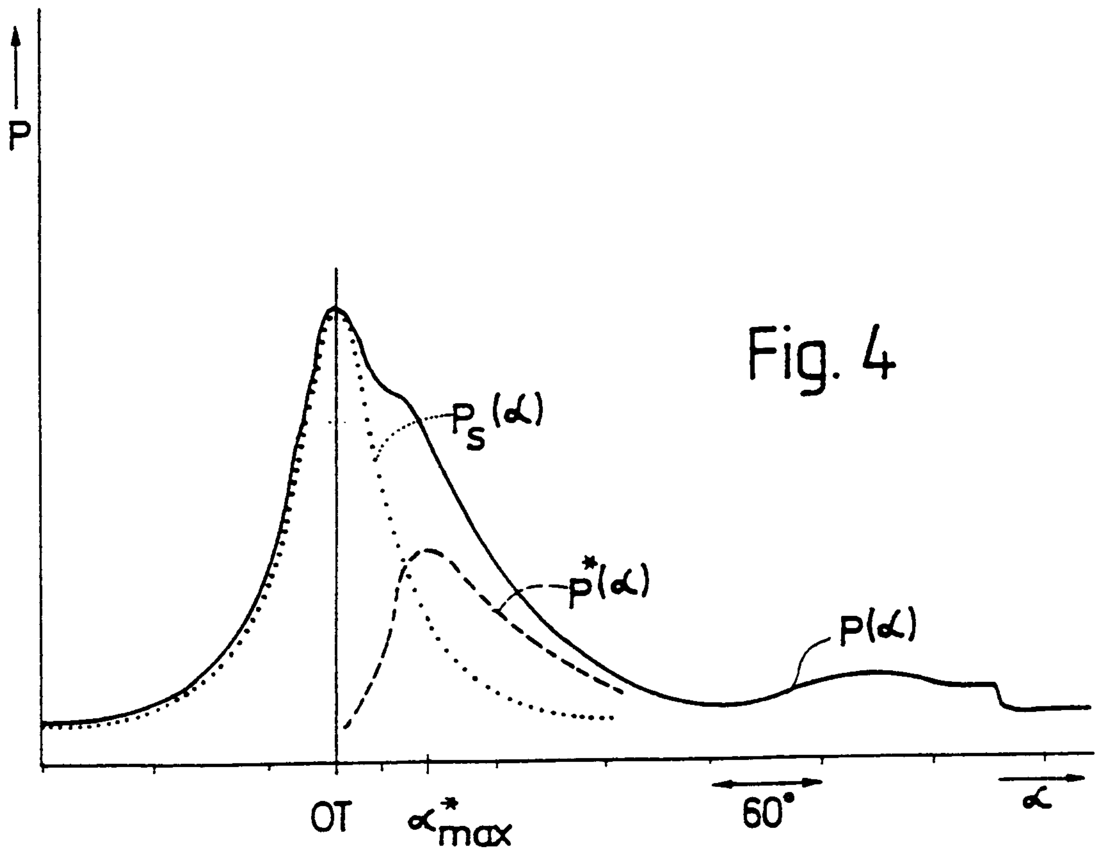


Fig. 4

Fig. 5

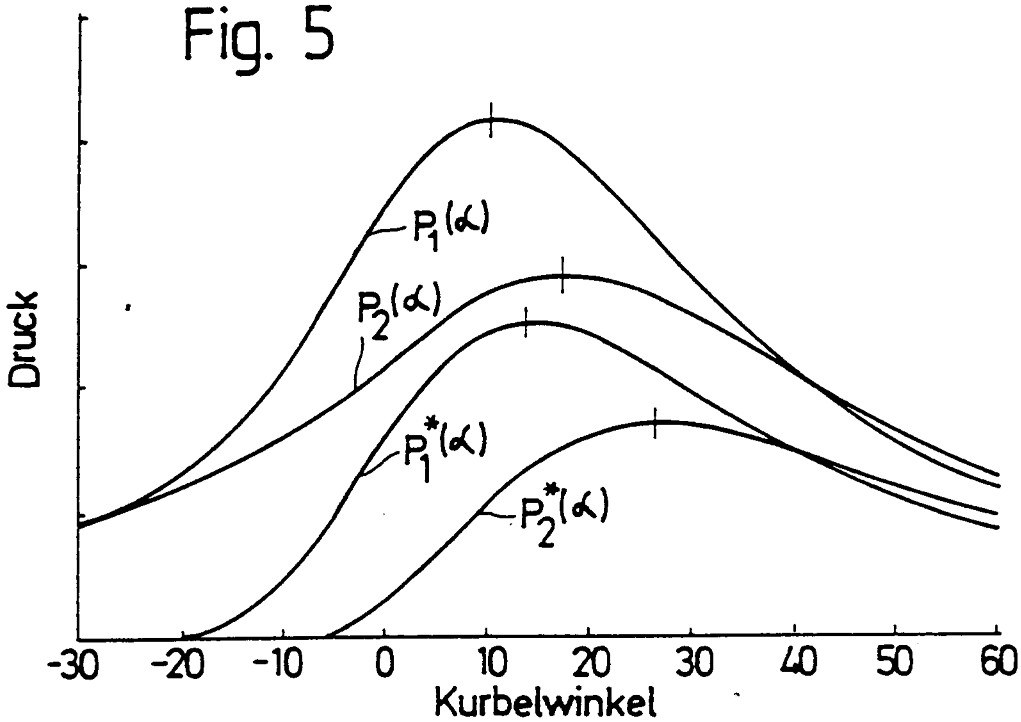
Druck
$P_1(\alpha)$
$P_2(\alpha)$
$P_1^*(\alpha)$
$P_2^*(\alpha)$
-30
-20
-10
0
10
20
30
40
50
60
Kurbelwinkel

Fig. 6

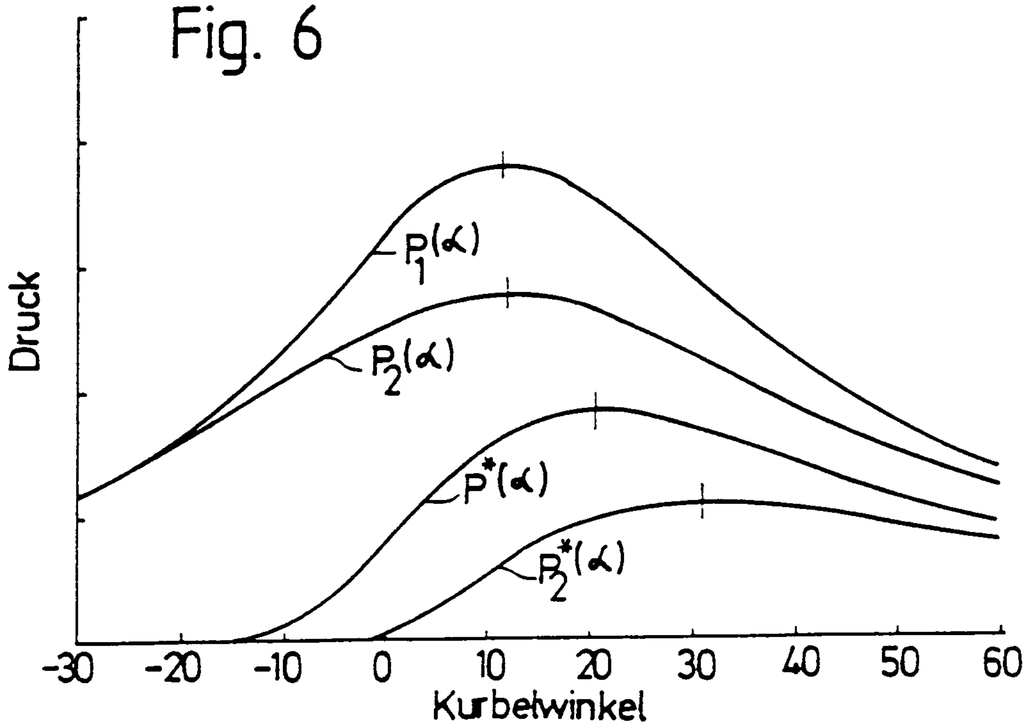
Druck
$P_1(\alpha)$
$P_2(\alpha)$
$P^*(\alpha)$
$P_2^*(\alpha)$
-30
-20
-10
0
10
20
30
40
50
60
Kurbelwinkel

Fig. 7

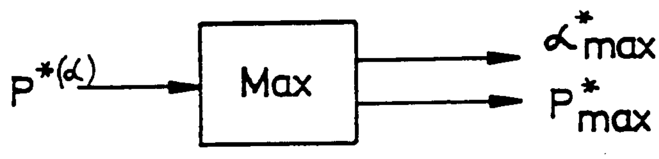


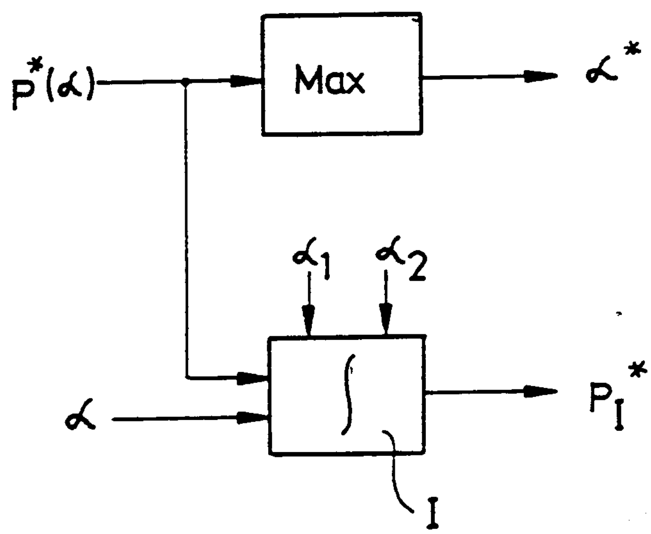


Fig. 8

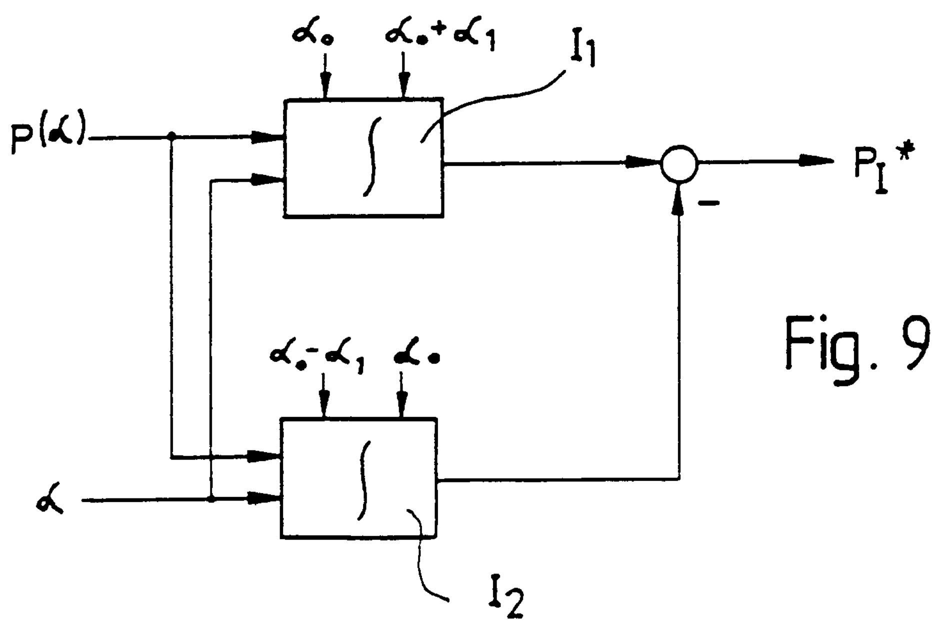


Fig. 9